# EUROPEAN PATENT APPLICATION

(11) **EP 1 767 768 A2**
(43) Date of publication of application: **28.03.2007**
(21) Application number: 06253846.7
(22) Date of filing: 21.07.2006
(51) Int. Cl.: F02K 1/12

(54) **Turbine engine nozzle**

(30) Priority: 22.09.2005 US 232508
(71) Applicant: UNITED TECHNOLOGIES CORPORATION, Hartford, CT 06101 (US)
(72) Inventor: Kehret, Debora F., Manchester CT 06040 (US)
(74) Representative: Leckey, David Herbert

(57) **Abstract**

A turbine engine nozzle assembly has an upstream flap assembly having a main flap (226) and a liner (228), a cooling passageway formed between the main flap (226) and liner (228). A downstream flap (26) is pivotally coupled to the upstream flap assembly for relative rotation about a hinge axis (H). The liner (228) has a trailing end (234) spaced upstream from a trailing end of the main flap (226) by at least 40% of a length (L_{F}) of the main flap (226).

## Description

### BACKGROUND OF THE INVENTION

The invention relates to turbine engines. More particularly, the invention relates to variable throat turbine engine exhaust nozzles.

There is well developed field in turbine engine exhaust nozzles. A number of nozzle configurations involve pairs of relatively hinged flaps: a convergent flap upstream; and a divergent flap downstream. Axisymmetric nozzles may feature a circular array of such flap pairs. Exemplary nozzles are shown in U.S. patents 3,730,436, 5,797,544, and 6,398,129 and United Kingdom patent application GB2404222 A.

### SUMMARY OF THE INVENTION

Accordingly, one aspect of the invention involves a turbine engine nozzle subassembly. An upstream flap assembly has a main flap and a liner. A cooling passageway formed between the main flap and liner. A downstream flap is pivotally coupled to the upstream flap assembly for relative rotation about a hinge axis. The liner has a trailing end spaced upstream from a trailing end of the main flap by at least 40% of a length of the main flap.

In preferred embodiments, the liner trailing end is spaced upstream of the main flap trailing end by 70-80% of the length of the main flap. Preferably the liner has a length 15-50%, more preferably 20-30% of the main flap length.

Further aspects and features of the invention are set forth in the claims.

The details of one or more embodiments of the invention are set forth in the accompanying drawings and the description below. Other features of the invention will be apparent from the description and drawings, and from the claims.

### BRIEF DESCRIPTION OF THE DRAWINGS

FIG. 1 is a cutaway longitudinal view of a prior art turbine engine nozzle.
FIG. 2 is a partial view of assembled flaps of the nozzle of FIG. 1
FIG. 3 is cutaway longitudinal view of a modified turbine engine nozzle.
FIG. 4 is an enlarged view of a convergent flap of the nozzle of FIG. 3.
FIG. 5 is a partial view of assembled flaps of the nozzle of FIG. 3.
FIG. 6 is an exploded view of a convergent flap liner member of the nozzle of FIG. 3.
FIG. 7 is an oblique outboard view of the liner member of FIG. 6.
FIG. 8 is an oblique inboard view of the liner member of FIG. 6.
FIG. 9 is an oblique inboard view of a convergent seal liner member of the nozzle of FIG. 3
FIG. 10 is an oblique outboard view of the convergent seal liner number of FIG. 9.
FIG. 11 is a transverse sectional view of the nozzle of FIG. 3.
FIG. 12 is a schematic longitudinal sectional view of the nozzle of FIG. 3.
FIG. 13 is a graph of gas mass flux for cooling and main flows against liner length.
FIG. 14 is a graph relating blowing ratios of baseline and modified nozzles.

Like reference numbers and designations in the various drawings indicate like elements.

### DETAILED DESCRIPTION

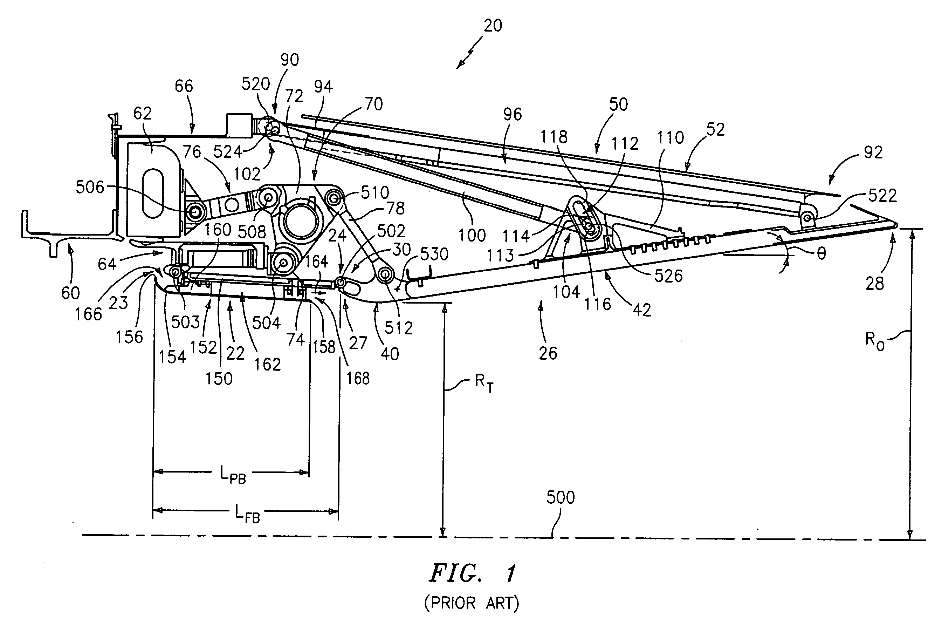

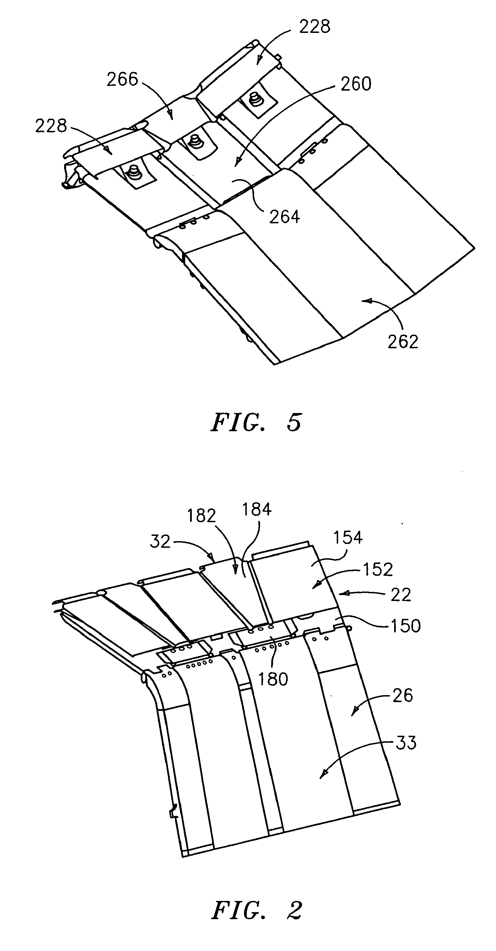

FIG. 1 shows a prior art turbine engine nozzle 20. The exemplary nozzle is drawn from United Kingdom patent application GB2404222 A (the disclosure of which is incorporated by reference herein as if set forth at length) and may serve as a baseline for modifications discussed below. The exemplary nozzle 20 comprises an axisymmetric circular array of convergent/divergent flap pairs about a nozzle axis or centerline 500. A given flap pair has a convergent flap 22 upstream/forward extending from an upstream end 23 to a downstream end 24 and a divergent flap 26 downstream/aft extending from an upstream end 27 to a downstream end 28. The flaps are hinged relative to each other by a hinge mechanism 30 for relative movement about a hinge axis 502 proximate the convergent flap downstream end and divergent flap upstream end. A concentric circular array of seals may be interspersed with the flap pair array. Exemplary seals (FIG. 2) have respective convergent members 32 and divergent members 33 between adjacent convergent flaps and divergent flaps, respectively. The inboard surface of the divergent flap 26 has a longitudinally convex surface portion 40 (FIG. 1) near its upstream end for forming an aerodynamic throat (i.e., the location of smallest passageway cross-section) of the nozzle of instantaneous throat radius R_{T} and an essentially longitudinally straight portion 42 extending aft therefrom toward the downstream end for forming an exhaust outlet of instantaneous outlet radius R_{O}. For each convergent/divergent flap pair, the nozzle further includes an external flap 50, the outboard surface 52 of which forms an exterior contour of the nozzle exposed to external airflow passing around the aircraft fuselage.

FIG. 1 further shows a nozzle static ring structure 60 for mounting the nozzle to the engine, aircraft fuselage, or other environmental structure. Proximate the upstream end 23 of the convergent flap 22, a hinge structure pivotally couples the convergent flap to the static ring structure 60 for relative rotation about a fixed transverse axis 503. A synchronization ring 62 is mounted between inboard and outboard aft portions 64 and 66 of the static ring structure and may be longitudinally reciprocated by actuators (e.g., pneumatic or hydraulic actuators-not shown). In the condition of FIG. 1, the synchronization ring is at a forwardmost/upstreammost position. The synchronization ring is coupled to each flap pair by an associated linkage 70. Each linkage 70 includes a central bell crank 72 pivotally coupled by a hinge mechanism to a bell crank ground point 74 at the trailing edge of the static ring structure inboard portion 64 for relative rotation about a fixed transverse axis 504. To drive rotation of the bell crank through its range of rotation about the axis 504, the bell crank is coupled to the synchronization ring by an associated H-link 76. A forward end of the H-link is pivotally coupled to the synchronization ring by a hinge mechanism for relative rotation about a transverse axis 506 which shifts longitudinally with the synchronization ring. An aft end of the H-link is pivotally coupled to the bell crank by a hinge mechanism for relative rotation about a transverse axis 508 which moves along a circular path segment centered about the axis 504 in response to linear translation of the axis 506. Thus, as viewed in FIG. 1, a rearward shift of the synchronization ring produces a clockwise rotation of the bell crank about the axis 504. Rotation of the bell crank is transferred to articulation of the associated flap pair by an associated pair of transfer links 78. Forward/upstream ends of each pair of transfer links are pivotally coupled to the bell crank for relative rotation about a transverse axis 510 which also moves along a circular path segment centered about the axis 504 in response to linear translation of the axis 506. Aft/downstream ends of the transfer links are pivotally coupled to the divergent flap 26 for relative rotation about a transverse axis 512. As discussed below, in the exemplary embodiment movement of the axis 512 is not entirely dictated by the rotation of the bell crank and associated static ring translation. Rather, it may be influenced by other forces, namely aerodynamic forces arising from relative pressures internal and external to the nozzle. In exemplary embodiments, the axis 512 falls aft of the axis 502 and along a forward half of the span between upstream and downstream ends of the divergent flap. More narrowly, it falls along a forward third, and, in the illustrated embodiment, approximately in between about the first 5% and 15% of such span.

In the exemplary embodiment, the external flap 50 has a forward end 90 pivotally coupled by a hinge mechanism to the static structure outboard portion 66 for relative rotation about a fixed transverse axis 520. Proximate its downstream end 92, the external flap is pivotally coupled by a hinge mechanism to the divergent flap 26 (slightly more forward of its downstream end 28) for relative rotation about a transverse axis 522. The external flap is configured so that the span between the axes 520 and 522 is extensible and contractible such as by having an upstream link 94 telescopically mounted relative to a main body portion 96 of the external flap and coupling the external flap to the static ring structure. The extensibility/contractability may have a limited range. For a further limitation on that range, a secondary link or mode strut 100 is provided having a forward end portion 102 pivotally coupled to the static ring structure for relative rotation about a fixed transverse axis 524 which may be close to the axis 520. If the axes 520 and 524 are coincident, it may be advantageous to drill one hole through all pivot points for low cost. However, if the width of the external flap 50 is such that the main body portion 96 on either circumferential side of the flap are substantially circumferentially spaced from the mode strut, it may be advantageous to locate the axis 520 relatively closer to the engine centerline than the axis 524 so as to maintain a good mechanical advantage for the mode strut.

An aft end portion 104 of the mode strut is pivotally coupled to the divergent flap 26 for relative rotation about an axis 526 fixed relative to the mode strut but floating relative to the divergent flap with a restricted range of movement. The exemplary range of movement is provided by the use of a pair of mounting brackets 110 at an intermediate location on the divergent flap, each having a slot 112 accommodating an obround slider 113 on a pivot shaft 114 fixed along the axis 526 relative to the mode strut. The slider and shaft are free to move along the slot between first and second ends 116 and 118 thereof. An exemplary intermediate location is, approximately within the middle third of the divergent flap length and the middle third of the span between axes 512 and 522.

In operation, the position of the synchronization ring 62 determines a nominal throat radius R_{T} and associated throat area (i.e., a throttle condition). In a given synchronization ring position, the aerodynamic forces may then determine the mode which is nominally associated with the divergent flap interior surface angle θ. FIG. 1 shows the synchronization ring at the forward extremity of its range of motion, thereby establishing the maximum nominal throat area. FIG. 1 further shows a high mode condition in which the aerodynamic forces place the divergent flap in its maximum θ condition with the slider 113 bottomed against the slot end 116. Under changed conditions, the force balance across the combination of external flap 50 and divergent flap 26 may produce an alternate θ. For example, in a maximum area, minimum θ low mode condition the slider may be 113 is substantially bottomed against the slot end 118. In an alternate configuration, the operation of the mode strut is reversed (i.e., the slider arrangement is at the strut's connection to the static structure rather than at its connection to the divergent flap).

In minimum throat area/radius conditions, the synchronization ring 62 is shifted to the rearmost extreme of its range of motion. During the transition of the synchronization ring, there is associated telescoping (contraction as shown) of the external flap. The need to accommodate a sufficient range of telescoping across the throat area range may, as noted above, exceed a desired range of extensibility associated with the mode shift. Thus the mode strut may still operate to restrict a range of movement of the divergent flap and external flap combination.

FIG. 1 further shows the upstream flap 22 as including a main flap 150 and a liner member 152 mounted inboard thereof. The exemplary liner member 152 includes a panel 154 extending from an upstream end 156 to a downstream end 158. One or more brackets 160 mount the liner member 152 to the associated main flap 150, holding the liner member spaced apart therefrom by a gap 162. In operation, a cooling air flow 164 passes through the gap 162 from an inlet 166 to an outlet 168. The exemplary liner panel 154 has a length that is a major portion of an overall length of the convergent flap. For example, the length may be measured as a longitudinal length L_{PB} in a max throat high mode or low mode condition wherein the flap is oriented close to longitudinal. In this condition, the overall flap length is designated L_{FB}. Exemplary L_{PB} is approximately 80% of L_{FB}.

Similarly to the convergent flaps, FIG. 2 shows the convergent seals 32 as including a main seal member 180 and a liner member 182. The liner member 182 may have a similar panel and bracket construction to the liner member 152. Its panel 184 may have lateral portions configured to interfit and cooperate with lateral portions of the adjacent panels 154.

The combined liner members of the convergent flaps and convergent seals thus forms an overall liner. The liner cooperates with the convergent flaps and seals to create an interrupted (e.g., by the bracket legs) annular channel. The channel carries cool fan air for discharge into the gas turbine nozzle hot gas stream. The liner shields the adjacent portions of the convergent flaps and seals from exhaust gas heating. The discharged air provides a film cooling effect over the exposed surface of the convergent nozzle (flaps and seals) and downstream along the throat and divergent nozzle.

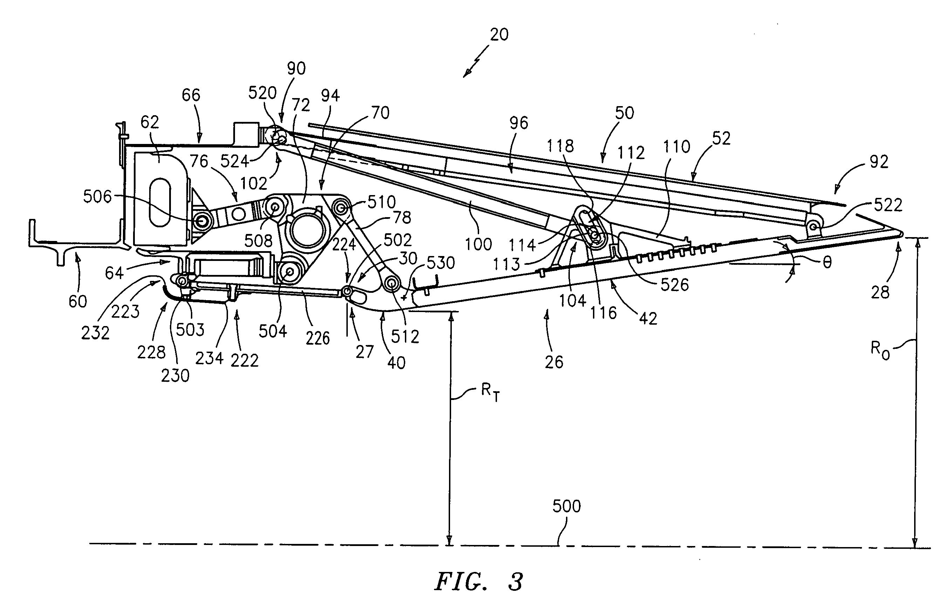

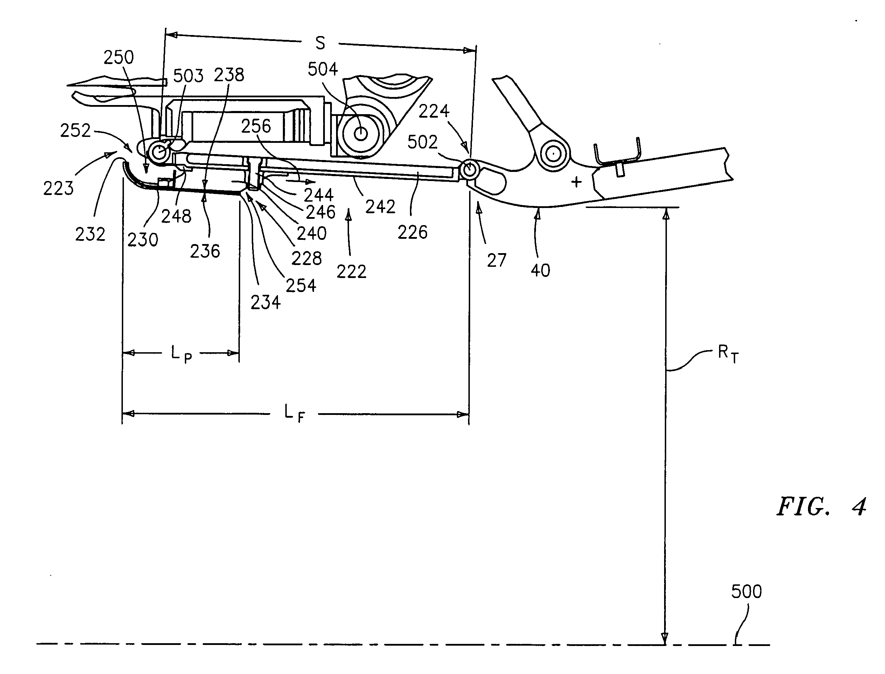

We have determined that discharging cooling air further upstream may produce cooling benefits (discussed below). Thus, in accordance with the present teachings, the liner panel length may effectively be shortened. FIG. 3 shows a modified convergent flap 222 extending from an upstream end 223 to a downstream end 224. The convergent flap 222 includes a main flap 226 and a relatively short liner member 228 at an upstream end thereof. The enlarged view of FIG. 4 shows the liner member 228 as including a panel 230 extending from an upstream end 232 to a downstream end 234 and having an inboard surface 236 and an outboard surface 238. The liner member also includes a mounting bracket 240. The panel has a longitudinal projected length L_{P}. An exemplary length L_{P} is a minor portion of a projected overall length L_{F} and a minor portion of a nearly similar main flap length. In the exemplary implementation, the main flap length is substantially close to the unprojected distance/spacing (S) and projected longitudinal spacing between the axes 502 and 503. The panel 230 is mounted to an inboard surface 242 of the main flap by the mounting bracket 240. In the exemplary configuration, the main flap carries a threaded stud 244 that passes through an aperture in the bracket 240 and is secured to the bracket by a nut 246. A retainer clip 248 mounted to the main flap captures an upstream portion of the bracket 240 to further retain the liner member. A channel 250 thus extends between the panel and the main flap from an upstream inlet 252 to a downstream outlet 254 and passes an air flow 256.

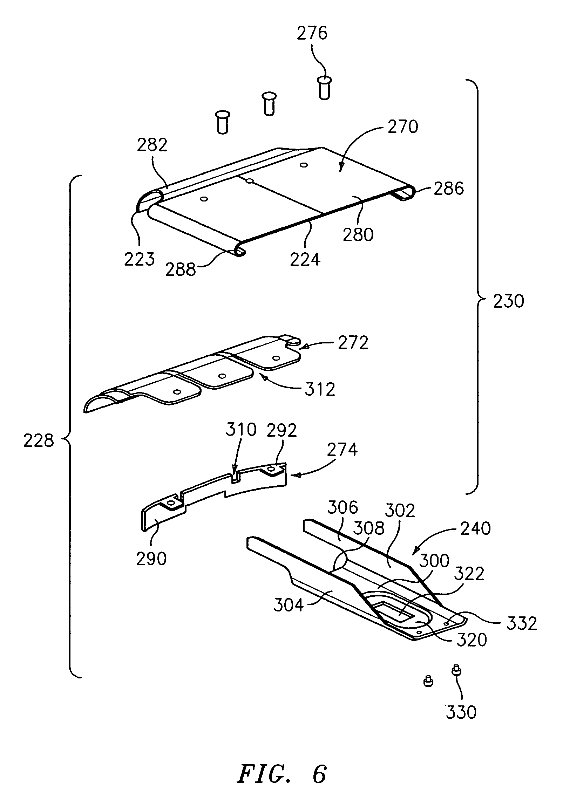

FIG. 5 shows a convergent seal member 260 and a divergent seal member 262 between adjacent pairs of convergent and divergent flaps. The convergent seal member 260 includes a main seal 264 and a similarly foreshortened liner 266 mounted to the main seal 264 in similar fashion to the mounting of the liner members 228.

FIG. 6 shows further details of an exemplary liner member 228. The exemplary panel 230 is formed as an assembly of a main panel element or liner sheet 270, a backing sheet 272, and a flow blocker 274 secured by rivets 276. The exemplary liner sheet 270 includes a generally flat, rectangular central portion 280 that extends to the downstream end 224. An arcuate upstream deflector 282 extends upstream from an upstream end of the central portion 280 to the panel upstream end 223. The backing sheet 272 extends along a forward portion of the central portion 280 and along the deflector 282, protruding slightly beyond the sides thereof. Lateral portions 286 and 288 of the liner sheet 270 extend along lateral edges of the central portion 280 and are curled outboard. It will be seen that the lateral span of liner sheet 270 is greater than its length. In some embodiments the length is 40-60% of the lateral span. Whereas the exemplary backing sheet 272 lies flat against the liner sheet 270, the exemplary flow blocker 274 has a main body 290 extending outboard from the liner and backing sheets and a pair of mounting tabs 292 engaging the outboard surface of the backing sheet and secured by a lateral two of the rivets 276.

The exemplary bracket 240 has a central web 300 and lateral webs or legs 302 and 304 extending outboard. The legs 302 and 304 have upstream end portions 306 extending beyond an upstream end 308 of the web 300 and received in slots 310 in the flow blocker 274 and slots 312 in the backing sheet 272.

FIG. 6 further shows a recessed area 320 and a central aperture 322 in the central portion 300 for receiving the mounting stud and bolt. Additionally, a pair of locating pins 330 (discussed below) are shown. In an exemplary sequence of manufacture, the liner sheet 270, backing sheet 272, flow blocker 274, and bracket 240 are made from sheet stock (e.g., by stamping and forming). The bracket legs are then welded to the outboard surface of the liner sheet. The welded assembly may then be welded with a protective coating (e.g., a silicide coating). The backing sheet and flow blocker are then assembled to the liner sheet with their slots receiving the bracket legs. The backing sheet and flow blocker may be pre-coated prior to assembly. Once assembled, the rivets may be applied.

For improving alignment of the bracket with the main flap, the exemplary embodiment utilizes the locating pins 330. These register with holes 332 in the bracket and corresponding holes (not shown) in the main flap. The holes 332 may be drilled into the bracket prior to coating (e.g., after welding). Exemplary materials for the liner member components are high temperature alloys. In the exemplary embodiment, the liner sheet 270, bracket 240, rivets 276, and locating pins 330 are formed of niobium (Nb), the backing sheet 272 is formed of nickel-based superalloy 625, and the flow blocker 274 is formed of nickel-based superalloy 718. The seal liner members 266 may be similarly manufactured.

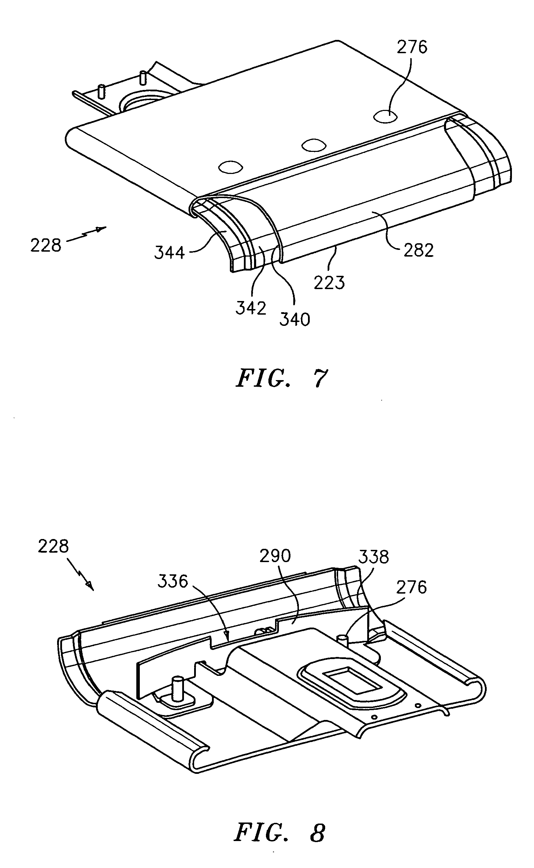

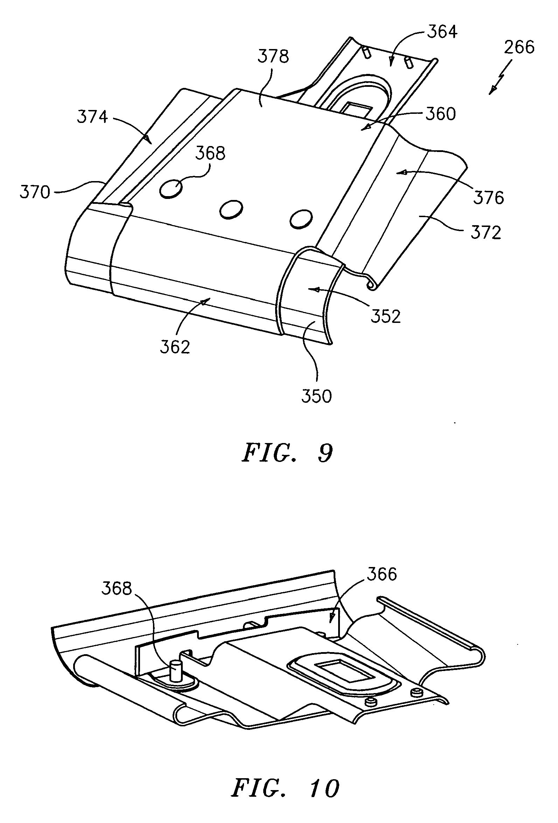

FIGS. 7 and 8 show further details of the assembled liner member 228. The flow blocker main body 290 has a central recess 336 along its outboard/distal edge 338. The recess 336 may be provided for clearance relative to the clip 48. The height of the body 290 is selected to provide a desired degree of flow restriction for the cooling flow 256. The deflector 282 (FIG. 7) has laterally recessed edge portions 340 beyond which end portions 342 of the backing sheet protrude. The end portions 342, themselves, have recessed terminal portions 344 which respectively interfit outboard of protruding end portions 350 (FIG. 9) of a backing sheet 352 of the seal liner member 266. FIG. 9 shows the seal liner member 266 as also including a liner sheet 360 having an upstream deflector 362, a mounting bracket 364, a flow blocker 366 (FIG. 10) and rivets 368.

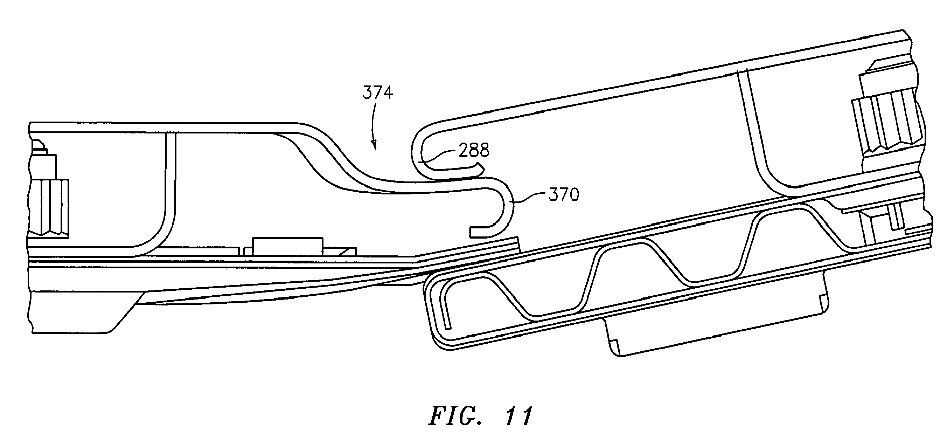

The exemplary liner members 266 include outwardly recessed lateral portions 370 and 372 defining rebated/recessed areas 374 and 376 shifted outboard of a central portion 378. The recessed areas 374 and 376 respectively accommodate the lateral portions 288 and 286 to permit interfitting of the respective panels of the liner members 228 and 266 (FIG. 11). The exemplary recessed areas 374 and 376 are tapered to accommodate the range of convergence of the nozzle convergent flaps.

The present nozzle may be engineered as a redesign of an existing nozzle or otherwise engineered for an existing environment (e.g., as a drop-in replacement for an existing nozzle such as the nozzle of FIG. 1 or the convergent flaps and seals thereof). For example, the illustrated nozzle may be formed as a retrofit kit for a baseline nozzle such as the nozzle of FIG. 1. In an exemplary retrofit, the convergent main flaps and main seals and convergent flap and seal liner members may be replaced. The main flaps and main seals may be dimensionally similar to the corresponding baseline components but adapted to include appropriately positioned mounting studs or other features for the associated liner members. The liner members may be substantially foreshortened relative to the corresponding baseline components. For example the downstream end of the replacement liner members may be positioned upstream from a former position of the downstream end of the baseline liner members by at least 10% of a length of the convergent flap.

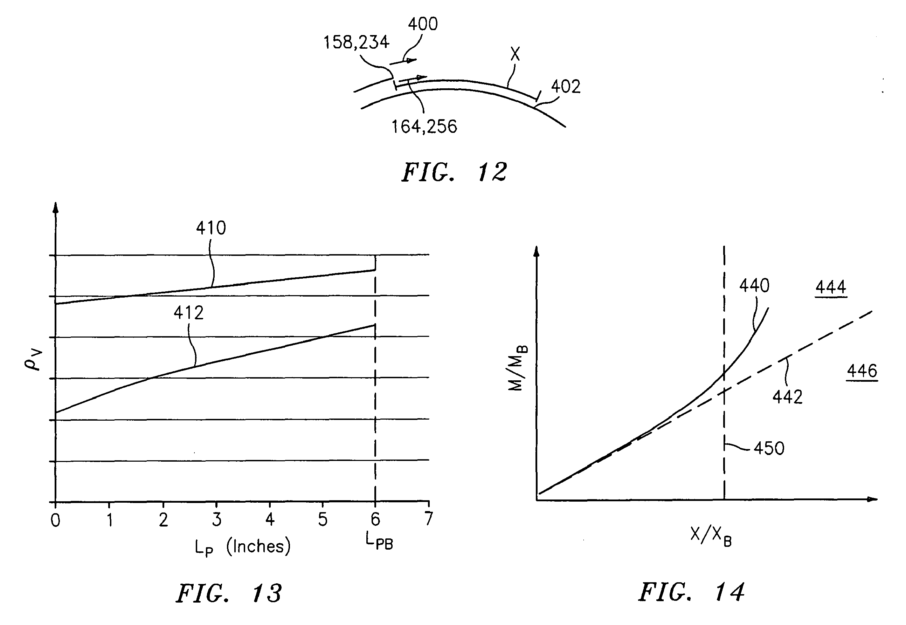

FIG. 12 shows the engine main (core) exhaust flow 400 meeting the cooling flow 164, 256 at the liner downstream end 158, 234 for the baseline and reengineered nozzles/liners. The cooling flow provides film cooling along the nozzle surface. The cooling effectiveness of the film is believed to be a function of: 1) the distance traveled from the liner (the liner discharge plane); and 2) the mass flux ratio between coolant gas and core gas at the discharge plane. The coolant gas mixes with the core gas and heats up as it travels the length of the exposed convergent and divergent sections. This phenomena is designated as film effectiveness decay, and is dependent on the mass flux ratio levels at the discharge plane. As is discussed below, the cut-back liner discharges the cooling gas film in a more favorable location at a forward portion of the nozzle. At this forward location the coolant-to-core gas mass flux ratio is optimized, mixing is reduced, and the enhanced film effectiveness level offsets the increased length of travel.

The effects of this cooling flow may be determined at a point 402 a distance X along the nozzle downstream of the liner. The point 402 may be a location of particular criticality (e.g., a location of maximum temperature or thermal erosion). The point may be determined experimentally, or simply by post-use observation of the engine. As the liner is cut back (exit shifted upstream) by a given distance, the X-value of the particular point will increase by that distance.

The flows 400 and 164 each have a density ρ and a velocity V. FIG. 13 shows a model plot 412 of the product of this density and velocity (the mass flux) for the flow 400. FIG. 13 also shows a model plot 410 of mass flux for the flow 164. The domain extends from zero to the baseline liner length L_{PB}. The ratio of mass flux of the coolant flow 164 to the mass flux of the exhaust flow 400 is designated the blowing ratio M.

FIG. 14 shows a model plot 440 wherein the domain is the ratio of the X-value of the chosen point 402 for the redesigned (cut-back) liner/nozzle to that value X_{B} of the baseline nozzle. The range is the ratio of the blowing ratio M of the redesigned liner/nozzle to the blowing ratio M_{B} of the baseline nozzle. A line 442 divides a first region wherein cooling at the point 402 is improved (e.g., surface temperature reduced) from a second region wherein such cooling is reduced. Thus improved cooling appears to be achieved by increased cut-back.

The exemplary nozzles have variable throat area (although the present teachings may also be applied to other nozzles). For a typical variable nozzle throat area configuration, there is a partial nesting overlap of lateral portions of the flap liner panels and seal liner panels. The degree of overlap varies inversely as a function of nozzle jet area. The interfitting overlap features (whether actually overlapping in a min. throat condition, apart in a max. throat condition, or in between) block flow and induce turbulence, interfering with film cooling effectiveness. The cut-back may reduce the maximum degree of overlap and may reduce the extent of the lateral overlap features thereby reducing or minimizing the amount of film disturbance generated by the overlap features.

In the baseline nozzle the cooling air flow is relatively insensitive to throat condition. This is because the liner exit is near the throat and the static pressure there is relatively constant. In the cut-back nozzle, at high nozzle jet areas (e.g., at or near the max. throat condition) the core pressure at the liner exit is reduced relative to an intermediate design throat area. This reduction causes the fan duct system to flow more coolant air to the liner system than at the intermediate throat condition. This enhanced flow rate offsets the enhanced mixing (due to the higher core velocity air at the high area condition relative to the intermediate area condition). Similarly, for low nozzle jet areas, the core velocity is reduced, mixing is reduced, and film effectiveness enhanced. The enhanced film levels offsets the reduced flow rate because at low jet areas the liner exit pressure is increased and less flow is discharged through the liner system. Therefore the flow and film effectiveness impacts counteract each other. Thus, as in the baseline, there may be substantial independence of cooling effectiveness and of nozzle jet area.

Protection of the convergent flaps/seals, however, imposes constraints on the cut-back. The cutback exposes a greater portion of the convergent flaps/seals to exhaust heating. Line 450 of FIG. 14 shows an X/X_{B} ratio below which (i.e., to the right) the convergent flap heating exceeds an imposed threshold (e.g., a maximum temperature greater than a target maximum). In a redesign/reengineering process, this may determine the chosen liner length.

One or more embodiments of the present invention have been described. Nevertheless, it will be understood that various modifications may be made without departing from the scope of the invention. For example, when implemented as a reengineering of an existing nozzle, various details of the existing nozzle may be preserved either by necessity or for convenience. Additionally, the principles may be applied to non-axisymmetric nozzles in addition to axisymmetric nozzles and to vectoring nozzles in addition to non-vectoring nozzles. Accordingly, other embodiments are within the scope of the following claims.

## Claims

1. A turbine engine nozzle subassembly comprising:
an upstream flap assembly (222) having a main flap (226) and a liner (228), a cooling passageway formed between the main flap (226) and liner (228);
a downstream flap (26) pivotally coupled to the upstream flap for relative rotation about a hinge axis (502); and
an actuator linkage coupled to at least one of the upstream flap and the downstream flap for actuating the upstream and downstream flaps between a plurality of throat area conditions,
wherein:
the liner (228) has a trailing end (234) spaced upstream from a trailing end of the main flap by at least 40% of a length (L_{F}) of the main flap (226).

2. The subassembly of claim 1 further comprising:
an external flap (50) pivotally coupled to the downstream flap (26) and to an environmental structure (60) so that a span between respective coupling locations with said downstream flap (26) and environmental structure (60) is extensible and contractable responsive to aerodynamic forces.

3. The subassembly of claim 1 or 2 wherein the liner comprises:
a liner body (270); and
a liner mounting bracket (240) secured to the liner body (270) and to the main flap (226).

4. The subassembly of claim 3 wherein:
the liner body (270) comprises an Nb-based sheet (270) and a Ni-based superalloy backing element (272).

5. The subassembly of any preceding claim wherein:
the liner trailing end (234) is spaced upstream from the main flap trailing end of the main flap (226) by 70-80% of the length (L_{F}) of the main flap (226).

6. The subassembly of any preceding claim wherein:
the liner (228) has a length of 15-50% of the length of the main flap (226).

7. The subassembly of claim 6 wherein:
the liner (228) has a length of 20-30% of the length of the main flap (226).

8. A turbine engine nozzle comprising:
a static structure;
a plurality of flap subassemblies comprising:
an upstream main flap (226) pivotally coupled to the static structure for relative rotation about an axis essentially fixed relative to the static structure; and
a downstream flap (26) pivotally coupled to the upstream flap for relative rotation about a hinge axis; and
a liner (228) along the upstream main flaps (226) and forming a generally annular cooling air passageway, the cooling passageway having an outlet spaced upstream of a downstream end of the main flaps (226) by a longitudinal distance of at least 40% of a longitudinal length of the upstream main flaps (226).

9. The nozzle of claim 8 wherein:
the plurality of flap subassemblies are axisymmetrically arranged about an engine centerline (500);
said articulation is simultaneous for each of the flap subassemblies; and
each of the plurality of flap subassemblies further comprises an external flap (50) pivotally coupled to the downstream flap (26).

10. The nozzle of claim 8 or 9 wherein the liner (228) comprises a circumferential array of:
a plurality of first members, each mounted to an associated one of the main flaps; and
a plurality of second members, each between an associated pair of the first members and mounted to an associated convergent seal.

11. A turbine engine nozzle comprising:
a static structure;
a convergent section comprising:
a circumferential array of first flaps (226), each pivotally coupled to the static structure;
a circumferential array of first seals, alternatingly interspersed with the first flaps (226); and
a liner assembly (226);
a divergent section comprising:
a circumferential array of second flaps (26), each pivotally coupled to an associated one of the first flaps; and
a circumferential array of second seals, alternatingly interspersed with the second flaps,
wherein
the liner (226) has an outlet spaced upstream of a downstream end of the first flaps (226) by a longitudinal distance of essentially at least 40% of a longitudinal length of the convergent section.

12. A gas turbine engine nozzle convergent section liner member comprising:
a panel (270) having:
an inboard surface;
an outboard surface;
a leading end (223);
a trailing end (224);
first and second lateral ends (286, 288);
a length between the leading end and the trailing end; and
a lateral span between the first and second lateral ends,
wherein:
the lateral span is greater than the length.

13. The liner member of claim 12 wherein:
the length is 40-60% of the lateral span.

14. The liner member of claim 12 or 13 wherein:
the panel (270) has:
a generally planar central portion (280); and
means along the first and second lateral edges for interfitting with complementary features of a complementary panel.

15. The liner member of any of claims 12 to 14 further comprising:
a mounting bracket (240) secured to the panel (270) and extending from the outboard surface and having:
a central web (300) essentially parallel and spaced apart from a central portion of the panel and having a bolting aperture (322); and
first and second lateral webs (302) extending toward the panel (270) from first and second edges of the central web (300).

16. The liner member of claim 15 wherein:
the panel (270) comprises a liner sheet (270), a backing sheet (272) along only an upstream portion of the liner sheet (270), and a deflector (274);
a plurality of rivets (276) securing the liner sheet (270), backing sheet (272), and deflector (274); and
a pair of welds secure the mounting bracket (240) to the liner sheet (270).

17. A method for retrofitting a turbine engine or reengineering a turbine engine configuration which engine or configuration has or has previously had a first nozzle subassembly having a convergent flap (22), a divergent flap (26), an external flap (50), and an actuation linkage coupled to the convergent flap (22), the method comprising:
replacing a first liner member (152) of the convergent flap (22) with a second liner member (228), the second liner member (228) having a downstream end positioned upstream from a former position of a downstream end of the first liner member (152) by at least 10% of a length of the convergent flap (22).

18. The method of claim 17 wherein:
said second liner member (238) provides a higher coolant-to-gas pv ratio than was provided by the first liner member (152).

19. The method of claim 17 or 18 wherein:
said second liner member (228) comprises a liner sheet (270) and a mounting bracket (240) welded to the liner sheet (270).

20. The method of any of claims 17 to 19 wherein:
a plurality of such first liner members (152) of a circumferential array of such first nozzle subassemblies are replaced with a plurality of such second liner members (228).
